# EUROPEAN PATENT APPLICATION

(11) **EP 1 288 805 A1**
(43) Date of publication of application: **05.03.2003**
(21) Application number: 01307238.4
(22) Date of filing: 24.08.2001
(51) Int. Cl.: G06F 17/60

(54) **eCommerce benchmarking**

(71) Applicant: Accenture Global Services GmbH, 8212 Neuhausen Am Rheinfall, Schaffhausen (CH)
(72) Inventor: Smith, Mark Alexander, Teddington, London TW11 8DH (GB); Cox, Justina Sarah Anne, London SW18 2SD (GB)
(74) Representative: Beresford, Keith Denis Lewis

(57) **Abstract**

The present invention comprises an electronic processing system for guiding a person through the stages of a project for benchmarking commerce over the internet, the system being adapted to generate sequences of screen displays in response to the inputs from the user, the screen displays containing data relevant to the stages of the benchmarking project, wherein the screen displays are stored in a database having a plurality of levels.

## Description

The present invention is concerned with an electronic processor system for use in the field of commerce over the Internet. Such commerce will hereinafter be referred to under the term "eCommerce". An eCommerce function is one which relates directly and indirectly into the use of a web presence for customer contact. In this context it must be appreciated that a customer can be internal or external of a particular company as it is very possible for a major company to have a number of relatively independent divisions which interact in a semi-autonomous manner.

The rapid spread of the Internet and the consequent explosion of businesses dealing over the Internet is well documented. It will also be appreciated that many of the earlier eCommerce schemes and the way in which they interacted with their potential customers contained severe flaws which at the very least severely prejudiced the chances of profitable eCommerce. This is not altogether surprising as the companies involved were pioneers in a new field. There is, however, no doubt that the potential for eCommerce has nowhere near been fully realised and that it is to form an increasingly important part of the business landscape in the world for a long time to come.

Thus a concern of the present invention is to provide a tool by means of which developers of the next generation of eCommerce subjects can avoid the mistakes that have occurred in the past when developing an eCommerce system or looking for improvements in an existing system.

One way of avoiding mistakes is to utilise what is known as benchmarking. Benchmarking has been defined as the continuous process of measuring products, services and purchases against the strongest competitors or those reknowned as world leaders in their field. However, whilst the concept of benchmarking is readily understandable the carrying-out of effective benchmarking in the field of eCommerce is fraught with difficulty. In particular, even if raw material is available to make benchmark comparisons it is extremely important to be able to identify and evaluate what are the key factors the understanding of which can lead to the success of the new eCommerce project. From the following it will be appreciated that these key factors go far beyond the direct interface between the new project and its potential customers. However another consequence of the complexity associated with successful eBenchmarking is that a very substantial amount of information is available over a wide area of sources and the knowledge of where this information can be mined and the experience required to put the information into practical use is very difficult to come by.

Accordingly a concern of the present invention is to provide a means whereby a person involved in eBenchmarking can be rapidly, simply and efficiently guided through a great deal of relevant information in an electronic format which is compact in terms of memory utilisation and easily transmittable.

In order that the present invention may be more readily understood an embodiment thereof will now be described by way of example and with reference to the accompanying drawings in which:
Figure 1 is a diagram showing a business model of eBenchmarking;
Figure 2 shows an example of electronic processor by means of which the present invention can be carried out;
Figure 3 is a block diagram of the main elements of the processor of Figure 2;
Figure 4 is a diagram showing the taxonomy of the database of a program utilised by the processor of Figures 2 and 3;

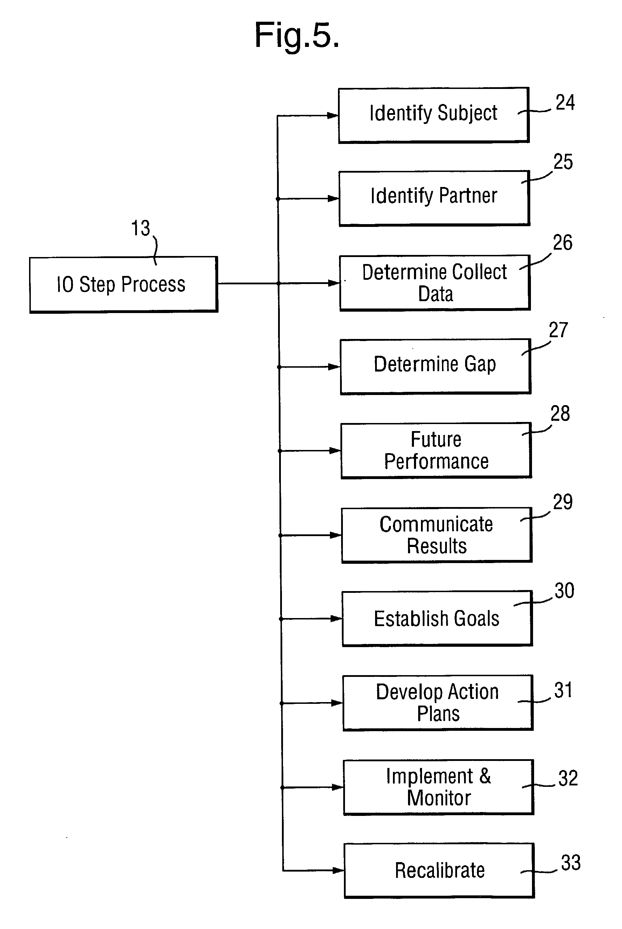

Figure 5 is a diagram of part of the taxonomy of Figure 4 in slightly greater detail;
Figure 6 is a diagram showing how a user can navigate through a section of the database;
Figure 7 shows the main components of an initial screen display of the database;

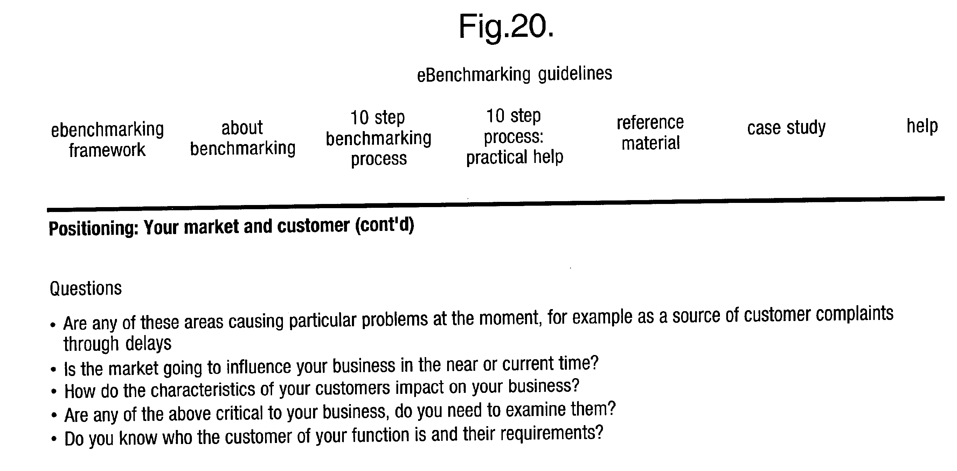

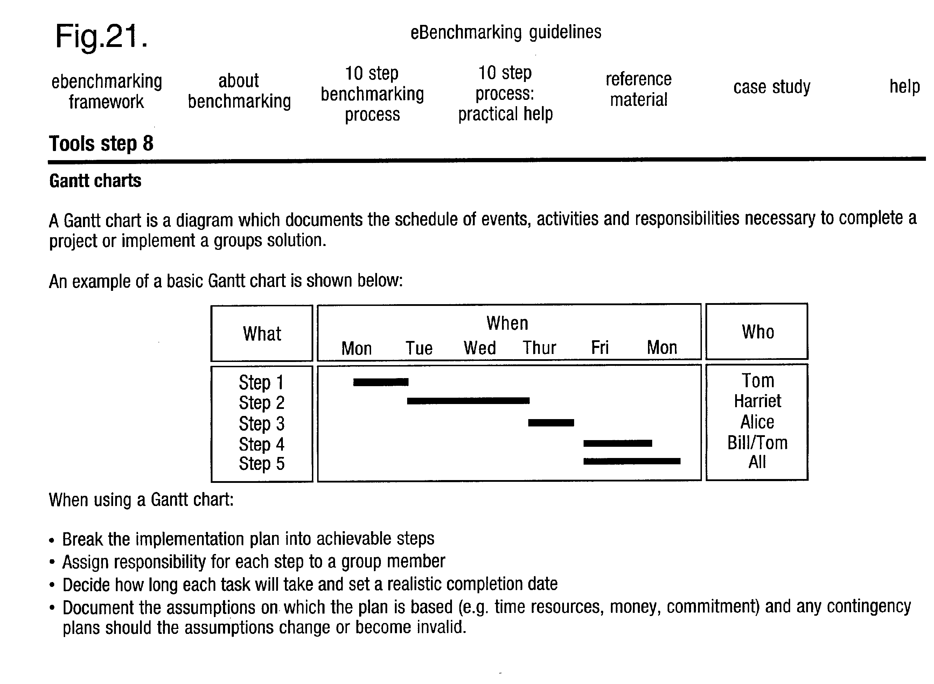

Figure 8 to 20 shows additional screen displays associated with specific modes of the general taxonomy shown in Figure 14;

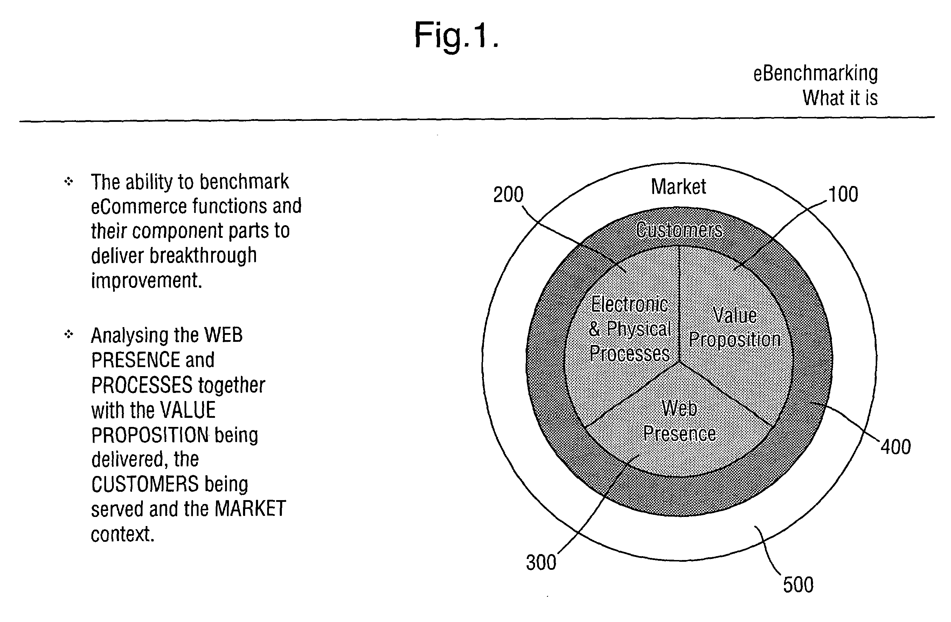

Referring now to Figure 1 of the accompanying drawings this shows a high level eCommerce business model. As can be seen in Figure 1 the business model is divided into a core having three segments. These segments are respectively Value Proposition 100, Electronic and Physical Processes 200, and Web Presence 300. Surrounding this core is a first ring 400 indicating the customers who are to be served by the business model and an outer ring 500 corresponding to the actual market in which business take place.

Figure 1 shows a general model and not all its components will be valid for all eCommerce functions. However, an analysis of the components of this model will give an insight as to the complexity of the problem with which the present invention is concerned.

Thus the outer ring 500 shows that market considerations have to be considered when contemplating benchmarking subjects. The examples set out in the following table merely indicate several market characteristics that might influence an eCommerce function.

**TABLE A**

| **MARKET CHARACTERISTIC** | **EXAMPLES** |
|---|---|
| Technology | Competitors are moving ahead in technology Customer base is moving to a different technology |
| Competition | New competitors are arising Existing competitors are taking market share Existing competitors are adopting new technology |
| Environmental change | Customer base is becoming steadily more net-savvy, opening up new markets Online transaction changes Legislative change between countries |
| Costs | Logistical costs are becoming an issue Staff recruitment and retention Technological costs increasing |
| Customer expectations | In general customer expectations of service quality are increasing You are entering a new market where expectation is already high |
| Speed | Market expectation of a prompt response is high |
| Relationships | Relationship development is becoming increasingly important in transactions Increasingly personalised experiences are required by your customers |
| Maturity | Are you first in the market, or is the eCommerce arena well established for your product |
| Outsourcing | Outsourcing becoming more or less economic Outsourced functions leading to loss of control in certain parts of the business |
| System Integration and/or Streamlining | Development of Corporate Portal to act as 'first stop' for all Company Processes and Procedures |

In addition to the characteristics set out in table A consideration also has to be taken of the business environment as this will also have implications for the choice of benchmarking subjects. For example, major categories of business environment are set out in table B.

**TABLE B**

| MODE | HOW TO RECOGNIZE IT |
|---|---|
| Business to Business | Ability to bulk buy Ability to view availability On time delivery of small numbers of products Professional format |
| Business to Consumer | Choice may be of primary concern |
| Consumer to Consumer | Reliability of service Guarantees |
| Intra-company Intranet | Reliability Sustainability Compliance or similarity to other intra-company facilities Integration with existing systems and processes |

Turning now to the inner ring 400 of the business model it is also apparent that customer characteristics will have an impact on the benchmarking focus.

This feature is important as identification of the customer will help develop knowledge as to what that customer ultimately wants. As already mentioned customers may come in two forms namely internal and external.

Table C sets out some considerations which have to be made with regard to the characteristics of the customer base.

**TABLE C**

| **WHAT ARE THE CHARACTERISTICS OF YOUR CUSTOMER BASE** | |
|---|---|
| **Customer characteristic** | **Examples** |
| Type | Upper middle class individuals between the ages of 35 and 55 Relatively affluent individuals |
| Community | Customers with community based characteristics, for example, an interest in foreign holidays or users of WAP phones |
| Demographics | Customers are based in one geographic area |
| Internal or External | eCommerce function is for internal customer use only |

Turning now to the core of the business model and in particular to the Value Proposition section 100 this section of the business model poses the question as to where does the value lie for the customer and where is the profit mechanism in any particular system under consideration for benchmarking.

Some considerations which have to be taken into account are set out in Table D.

**TABLE D**

| **Customer Value Proposition** | **Profit Mechanism** |
|---|---|
| Online market selling products and services Large selection of products and services at low prices | Margin on the products or service Margin on related services |
| Links and information regarding companies and individuals | Commission on transactions or links, membership fees Sponsorship or Advertising |
| Targeted market segment or special interest group with related products and services | Advertising Subscription (customers) and transaction (destination) fees |
| Online market for the exchange of goods and services | Transaction based fees Membership fees |
| Facilitator for offline commerce Shopping and post-sale services | Margin from incremental off-line sales Lowering of customer support costs Advertising |

Segment 200 of the business model relates to the Web Presence.

The question of Web Presence is important because this relates to the actual point of contact between the eCommerce function and the customer. As a result a number of factors have to be considered. Important questions include:
1) Does the Web Presence match customer requirements?
2) What do the customers actually use it for?
3) How well is the Web Presence integrated with the rest of the eCommerce function?
4) Does the site include more than one method of buying/interaction with the customer?

Finally segment 300 as its title implies relates to the actual physical and electronic processes involved in the eCommerce function being benchmarked. In a sense these factors are the easiest to compare with existing systems so that little emphasis will be placed on this segment of the business model.

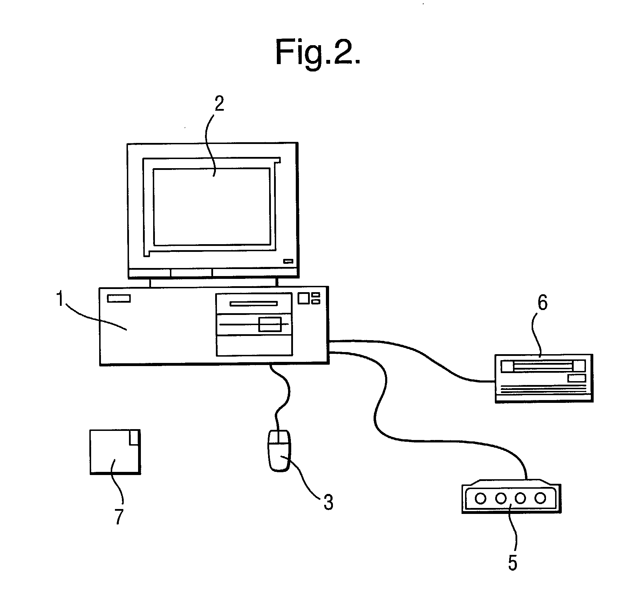

Having now disclosed general consideration with regards to benchmarking eCommerce function, an embodiment of the present invention will now be described starting with reference to Figure 2 of the accompanying drawings.

Referring now to Figure 2 of the drawings this shows a personal computer 1 having a display screen 2 and a mouse 3 by means of which information can be entered separate from the computers keyboard. The mouse 3 represents any other suitable user input device. The computer 1 has an modem 5 by means of which it can be connected to the Internet or a local area network. The computer 1 is connected to a hard disc 6 which can be used for the storage and retrieval of data. This may be in addition to a standard internal hard disc (not shown). Finally an external drive floppy disc 7 is shown from which the program which is the subject of the present invention can be downloaded. Of course, 7 can also represent a CD-rom or any other appropriate software carrying medium readable by the computer.

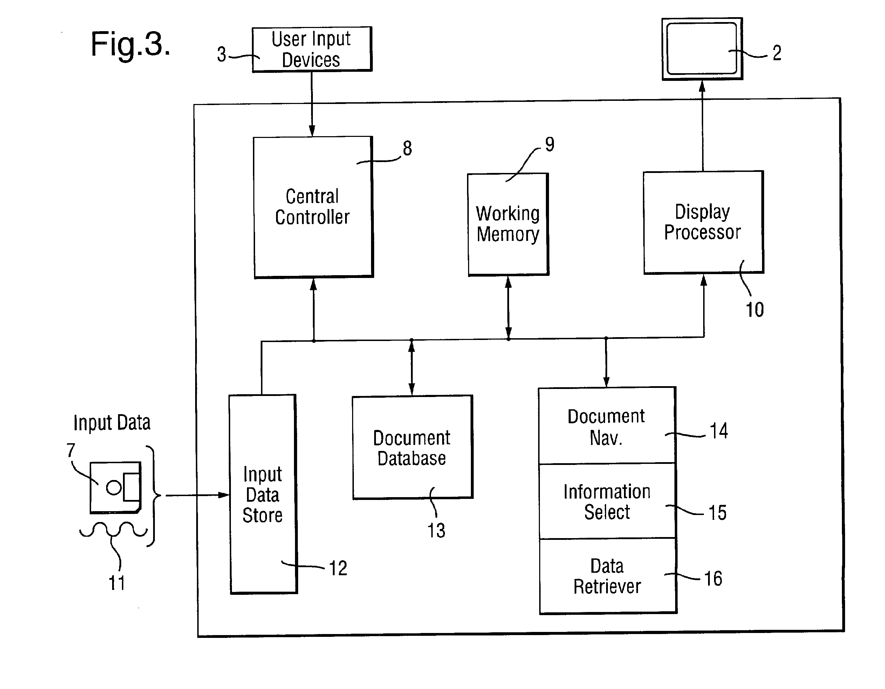

It will be appreciated that what is shown in Figure 2 is merely one example and that many other configurations are possible. Thus the computer 1 could be a laptop or alternatively could merely be a terminal via which stored data can be accessed either from the database or from another database connectable via the Internet. However the essential integers of the processor are shown in Figure 3. Integers which are common to Figures 2 and 3 have been given the same reference numerals. The processor shown in Figure 3 also includes a central controller or CPU 8, a working memory 9 and a display processor 10. Data received via the floppy disc or CD-rom 7 or via an external connection such as a local network or the Internet is indicated at 11 and the stored document is held in a document data 12. The input document is held in hierarchical form in a document database 13 and the processor finally includes three functional units 14, 15 and 16, namely a document navigation unit 14 which enables the user to navigate through the taxonomy of the database, a functional unit 15 which responds to the user's input to select data for display by the display processor and a data retriever unit 16 for retrieving data for the database 13.

In accordance with the present invention the processor 1 and its associated program is adapted to guide a person developing an eCommerce system through each stage of benchmarking for an eCommerce environment. This is achieved by means of a computerised multi-step process in which the user of the system will be shown by a series of linked screens how to measure current performance, identify internal and external best practices, how to prioritise areas for improvement and demonstrate the implementation of improved practices. Other features and advantages of the system will become apparent during the course of the following description.

Before discussing the phases and the steps through which a user is guided the taxonomy of the software will be described with regard to Figure 3 of the accompanying drawings.

Referring now to Figure 3 of the accompanying drawings this figure sets out the taxonomy of a program using software which enables a user to navigate through a substantial body of data pertaining to eBenchmarking in a logical fashion and in a manner which would be familiar to any user of web sites.

In the following description each step will be described in relation to the screen display associated with each of the numbered blocks of the taxonomy tree in order to give understanding of what is available to a user but even more particularly how the information is presented. It will of course be appreciated that the manner in which the program has been designed means that it can also be easily accessed over the Internet or a local network. What must also be appreciated is that there are many possible paths through the levels of the taxonomy tree that will be described and that the following description will concentrate only on steps and selected items of data, it being understood that additional material can readily be incorporated in the basic structure.

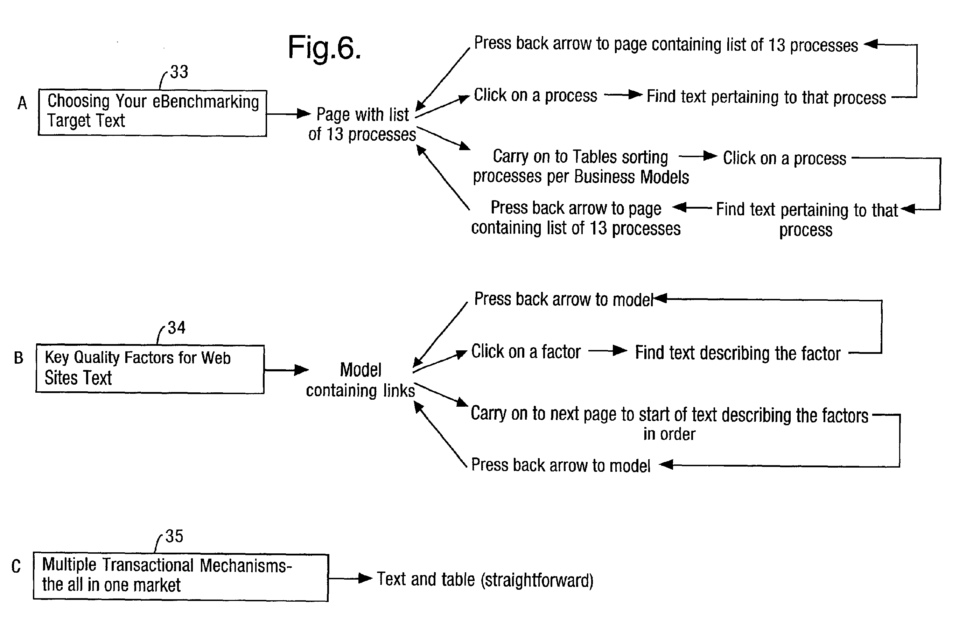

The first level is an introductory page. Thus at the first level a user loads the program and sees a first screen the main components of which are shown in Figure 6. In the present embodiment the screen displays seven headings. The seven headings are numbered 1H to 7H and are respectively entitled "E-Benchmarking Framework", "About Benchmarking", "10 Step Benchmarking Process", "10 Step Process:Practical Help", "Reference Material", "Case Study" and "Help".

The second level of the taxonomy shown in Figure 3 has seven sections marked 11 to 17 which correspond to selectable main headings 1H to 7H. The third level has the same number of sections marked 18 to 23 and these also will be described later. The arrows between the sections of level 2 show that it is possible to navigate immediately from any one section to another section in that level. They have only been shown as linking neighbouring sections in the interests of simplicity.

A user of the present invention is provided with two main modes of navigating through the database. Firstly, selection of a heading such as one of the seven headings just described will lead to the user into the second level of the database. This is the only mode of moving from the display of Figure 6 and as can be seen from Figure 3 the section of the database which corresponds to Figure 6 has no link to the third level.

Once the user is in the third level of the taxonomy progression is achieved either by selecting headings where the user requires more detailed data on that particular heading or by selecting directional arrows. In the present embodiment, these arrows are located at the bottom right-hand corner of a display screen if present. Once in the third level of the taxonomy these arrows enable the user to navigate within the third level by moving in the direction of the arrows either to access additional data or return to the original heading.

One feature of the invention is that at each entry page to the third level the user is always provided with the same seven main headings shown on the display screen of Figure 6. The result of this is that a user having selected a particular one of the headings 1H to 7H and having derived the necessary data relevant to that heading by navigating through the available data by using one or the other of the two modes it is then a simple matter to select the next heading that the user intends to explore.

The functions of the seven main headings 1H to 7H will now be described. Thus by selecting heading 1H the program generates a single page which summarises the basic concepts of the program and the actual procedures which will be followed when the most important headings are selected. The two most important headings are headings 3H and 4H so before these main headings are discussed in detail the other headings 2H, 5H, 6H and 7H will be briefly described.

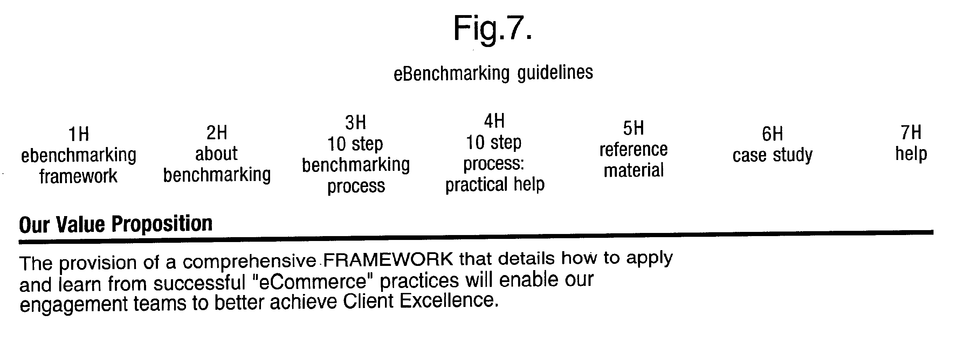

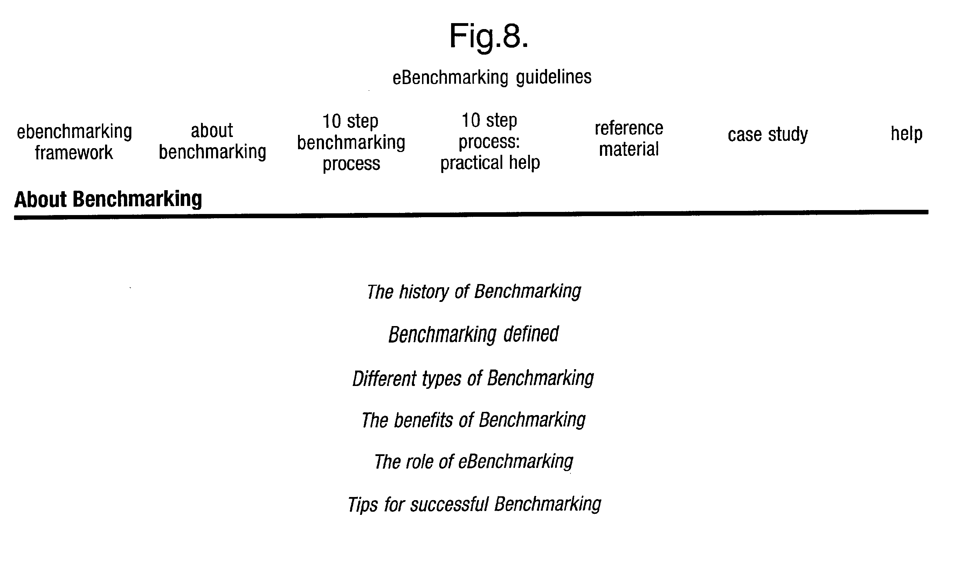

Selection of heading 2H, "About Benchmarking" generates the screen shown in Figure 7. As previously mentioned this screen has all seven main headings 1H to 7H present. The screen also has seven internal headings which are self explanatory and which can be selected by a user. Selection of any one of these seven sub-headings leads to information on the selected subject which in the case of the "history of benchmarking", for example, consists of three linked screens the first of which is shown in Figure 8. In this screen the direction arrows are already referred to as are shown at the bottom right-hand corner. The fact that this particular sub-heading has three pages and that this is the first of the three pages is indicated at the centre of the bottom of the screen. Finally, when a user navigates to the third of the three pages the arrow display will change so that it merely chose a double-headed left arrow in the selection of which goes back to the initial level 2 display in a single step and a single headed left arrow the selection of which returns the user to the second of the three pages. As this procedure is followed for all of the other sub-headings and is common to all of the third level taxonomy it will not be described again in detail.

As headings 5H, 6H and 7H are also of lesser importance they will not be described in detail as their titles give an indication of their subject matter. Accordingly attention will now be turned to the two most important main headings namely, headings 3H and 4H.

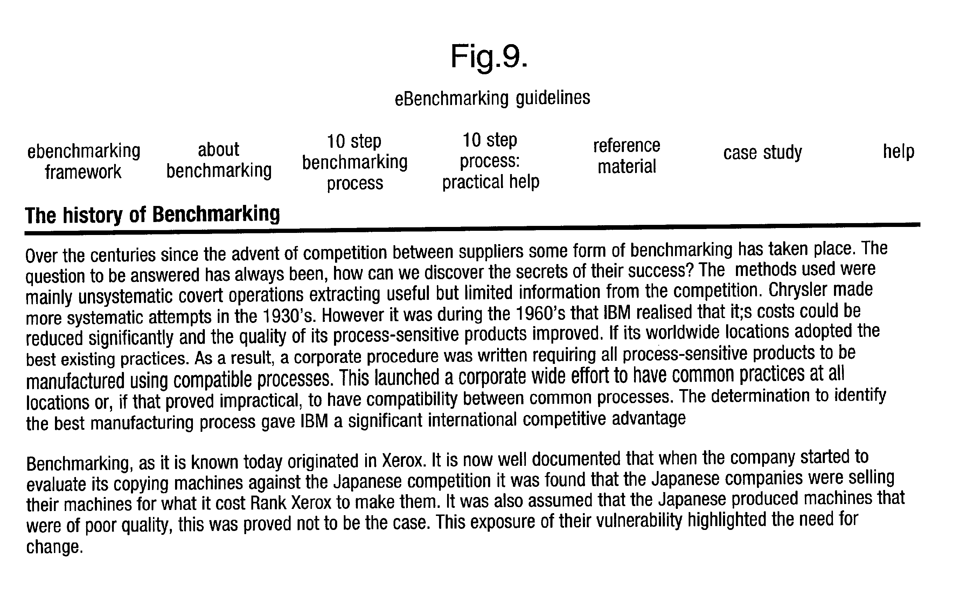

Selection of heading 3H generates the display screen shown in Figure 9.

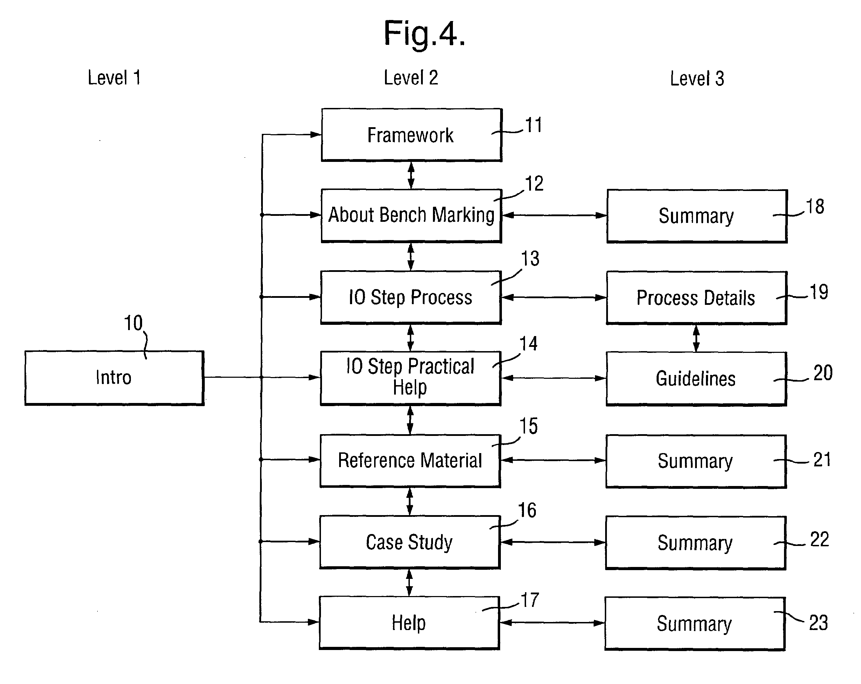

This screen sets out a sequence of ten action steps which correspond to the taxonomy shown in Figure 4 of the accompanying drawings. Step 26 is divided into two subunits concerning data collection The screen also shows that these ten action steps 24, 25, 26, 27, 28, 29, 30, 31, 32 and 33 are divided into five phases. Namely, a planning phase 50, an analysis phase 60, an integration phase 70, an action phase 80 and a maturity phase 90.

Thus planning phase 50 has three action items labelled 24, 25 and 26. These action items are respectively entitled:
- 24:: Identify Benchmark subject
- 25:: Identify Benchmark pattern
- 26:: (a) Determine data collection method
(b) Collect data

The analysis 60 phase has action steps:
- 27:: Determine competition gap
- 28:: Project future performance

The integration phase 70 has action steps:
- 29:: Communication results
- 30:: Establish functional goals

The action phase 80 has action steps:
- 31:: Develop action plans
- 32:: Implement plans and monitor results
- 33:: Recalculate benchmarks

The maturity phase 90 involves repeating as necessary selected steps from the previous phases. These action items will now be discussed in greater detail. However, it is to be appreciated that the action items shown in Figure 9 are the minimum of a successful implementation of the overall process. Each of the displayed action items represents a link to pages in the third level of the taxonomy tree of Figure 3.

In the following description when a heading or a direction arrow is selected it will be assumed that this is done via an inputting device such as a mouse or a rollerball. It is of course possible to use other selection techniques.

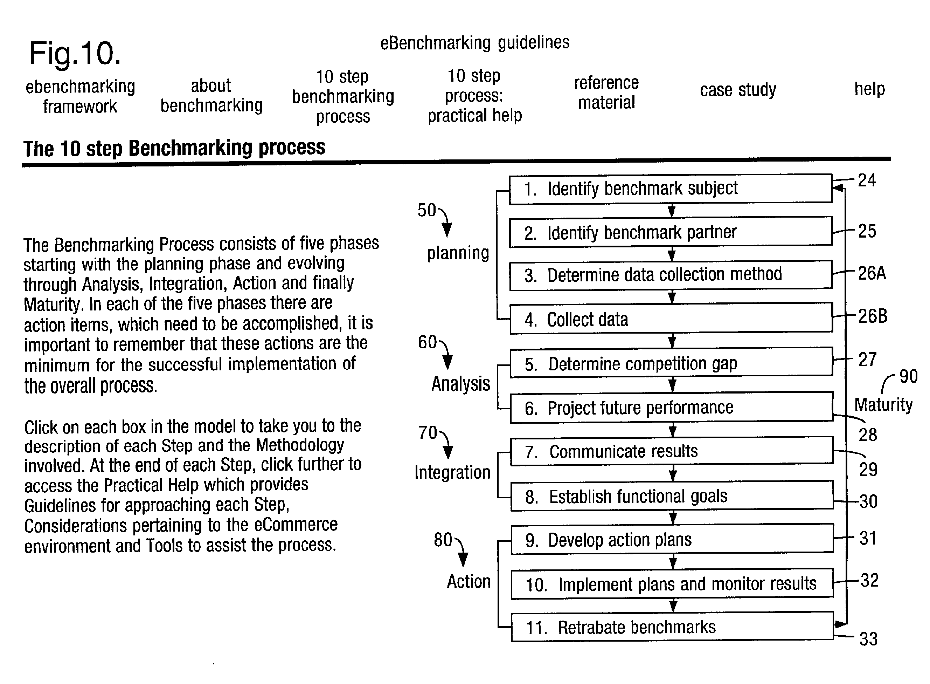

Action step 24 has been given the title "identify subject for ebenchmarking subject". This step is a very challenging one for anyone involved in ebenchmarking and involves selecting the correct subject for benchmarking, that is, the eCommerce function that requires improvement through identifying business function products, determining the selection criteria to be used, ensuring the selection is appropriate, determining the level of detail required, and, if necessary, documenting work processes. Thus the essential aim of this step is to identify those areas requiring improvement to give superior performance. The user of the system is thus offered the opportunity by selecting step 24 to display the table shown in Figure 10 of the accompanying drawings. Intermediate screen displays reached by using the direction arrows which are of relatively minor importance will not be described in detail.

This table identifies the potential subjects of step 24 which have to be examined. As shown in Figure 10 the concept of subjects is sub-divided five times and a number of examples are given on the page in respect of each of these subject sub-divisions.

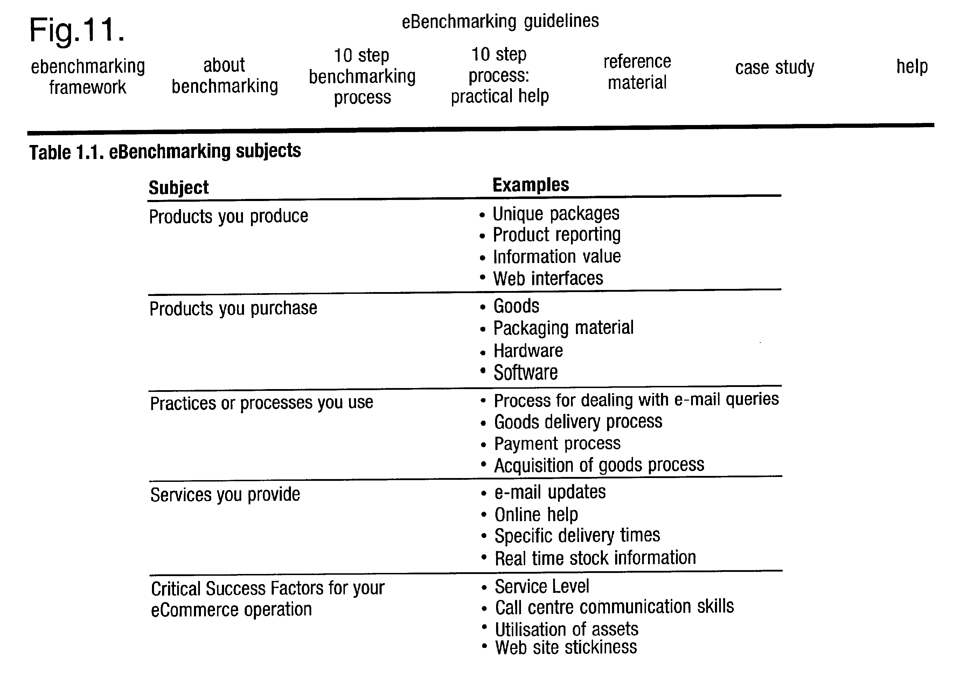

Selection of the right-hand direction arrow in Figure 10 leads to the display of Figure 11.

At this point in the specification it has to be made clear that in carrying out a practical implementation of the procedure being described it may be necessary to move through the phases, subjects and sub-sets of subjects a number of times before the final maturity phase 13 has been reached.

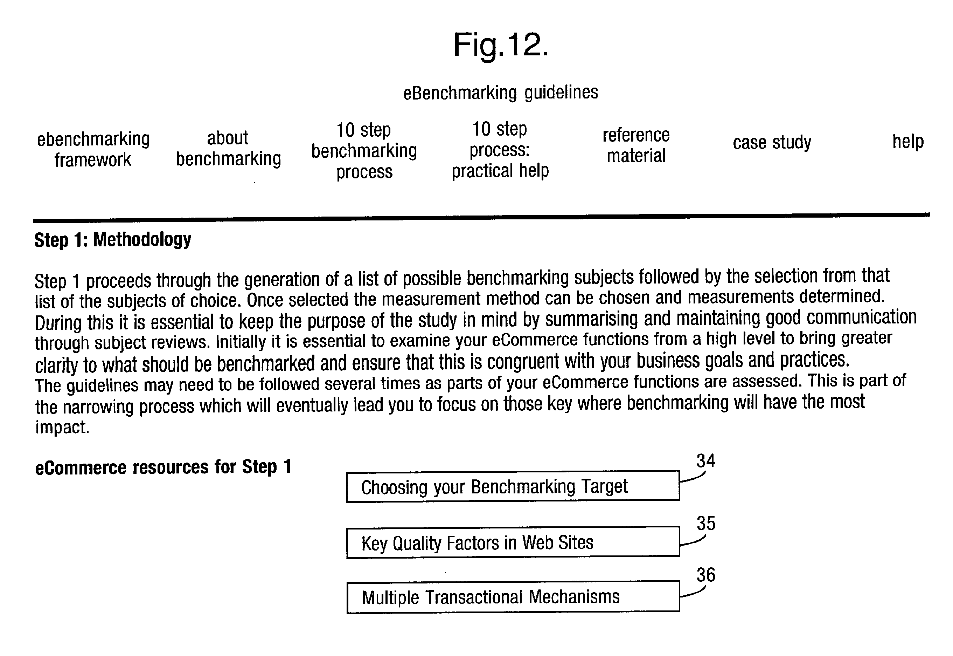

This display of Figure 11 is another important example as it utilises both modes of navigation through the data. Thus the display of Figure 11 provides in addition to the main headings 1H to 7H links to the next level of the taxonomy tree either via the headings 34,35 and 36 or via the usual direction arrows. Selection of heading 34 as a link provides the user with a sequence of displays of successive pages which lead the user through a consideration of business models and modes. Thus the pages of this sequence display three different business modes, named business to business, business to consumer (who may be an employee) and consumer to consumer and details as to the actual business models involved. Continuing this sequence leads to the page shown in Figure 12 which deals with thirteen processes which have a critical involvement with the three original business models. In this page the user is enabled to select each of these thirteen processes by clicking on to them so as to access additional display screens relevant to the listed processes.

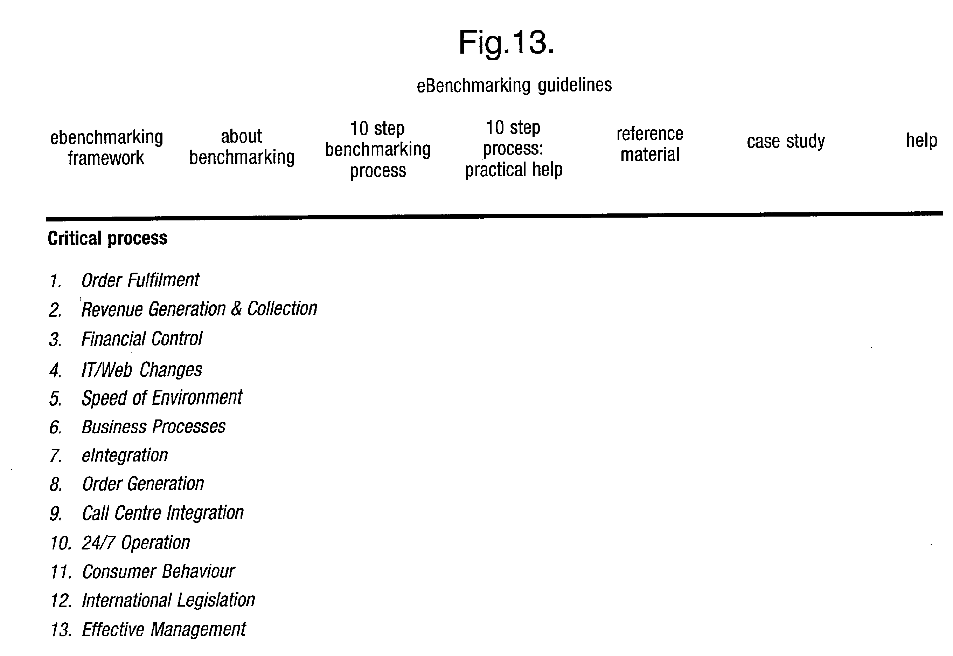

On the other hand choosing the right hand arrow from Figure 11 leads to the display shown in Figure 13. This display screen in fact is the same as that generated by selection of heading 4H of the main headings.

Thus this screen display can be reached via heading 3H and stepping through each of the pages displayed under each action step and by direct selection of heading 4H.

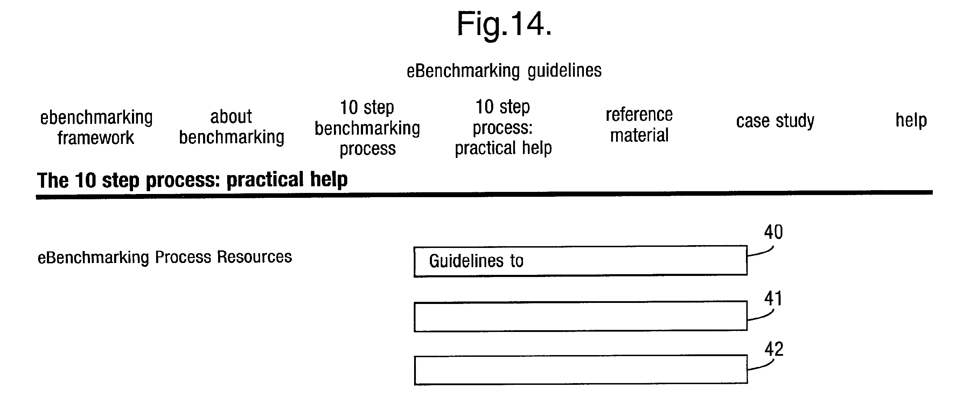

It is concerned with providing practical help to the user in implementing action steps 24 to 33. By selecting heading 40 of Figure 13 the screen changes to the display shown in Figure 14 which shows ten additional sub-steps each associated with heading 40. Selection of heading 41 generates seven additional steps, and heading 42 five additional sub-steps. These different sequences of sub-steps will be described after sub-steps 1 to 10 for heading 40 have been described. Thus selection of the heading and steps given continuous guidance and information to the user.

Selection of sub-step 1 of guideline heading 40 of Figure 14 generates a screen display asking the user to generate a list of potential ebenchmarking subjects.

Thus in guideline heading 40, sub-step 1 the operator is asked to generate a list of potential ebenchmarking subjects by gathering together as much information as possible on the eCommerce function under scrutiny. This is done through deciding the scope of the study, examining the market and customers, positioning the study in terms of the business model and aims and identifying those processes critical to the business. This initial step also requires a decision as to what it is that is to be benchmarked. The system leads the user through a series of questions all of which should be considered when setting up an ebenchmarking project.

Thus the sequence of display screens selected under guideline heading 40, sub-step 1 gives the user of the system guidelines with regard to the entire procedure for identifying subjects for ebenchmarking. This is, of course, by no means all of the information that is required and additional guidance is provided by Guideline headings 40, sub-step 2. Thus it is important to first establish what current information is available before proceeding with the benchmarking process, particularly which partner will be compatible for benchmarking. This is the subject of sub-step 2 of guideline heading 40. It reminds the user that existing information sources should be interrogated first prior to the user starting data collection with regard to this identification procedure it is also important to determine which companies or operations should be used for comparison purposes. Thus, the system prompts its user to prepare a list of companies and/or internal operations considered to be competitors or industry leaders. The final element of this sub-step is a screen which prompts the user who should now have made a list of companies for benchmarking purposes, with a sequence of questions concerning that list. For example these questions could be a) how reliable is the information about the competitor, b) is the competitor really in a business similar to mine? c) are the differences in my business and the competitor such that they may invalidate the results of the study? d) is the competitor friendly or unfriendly.

It will be seen that at the completion of this final sub-step of guidelines step 2 that the user of the system should have a list of companies which can be used in the benchmarking procedure.

Turning now to guideline headings 40, sub-step 3 this prompts the user to the necessity of determining the type and quality of the information required. This has to be determined at an early stage so that time and effort are not wasted subsequently on the data collection that is not required in the final analysis. These constraints can be determined by setting parameters on the data collection and the parameters themselves can be investigated by a list of questions prompted by the selection of this step. Essentially each question has to have a purpose so that the information obtained is relevant to the study. It will be appreciated that often considerations of the users own system or proposed system may give an indication as to the type of questions which should be asked.

In guideline headings 40, sub-step 3 the program of the present embodiment suggests among other factors that the user of the program should search for data in existing completed studies. Thus before original search is conducted it should first be determined if the information can be obtained from studies that have already been conducted. This can save both time and money. In addition legal issues associated with conducting individual research are avoided. Possible sources of data within the company are listed and include salesmen, customer service personnel, personnel hired from competition and suppliers. Sub-step 4 of guideline headings 40 requests the system user to tabulate the data which has been gathered by following the previous steps to analyse the data and to determine if there is a gap between internal data and external data. Competitive benchmarking projects typically do not involve large amounts of data so that this sub-step suggests that the results can be tabulated by using relatively simple computation such as: averages, maximum value, minimum value and ranges.

It is also shown that if the amount of data is greater the user may wish to develop graphs, histograms, piecharts etc and also to suggest that in cases where the data volume is high that more sophisticated statistical tools could be used.

The next screen of this sub-step advises the user to analyse the data correctly for the particular purpose. Thus in analysing the results of the calculation just carried out the user is told to identify those statistics that are related to the original purpose of the study. The data should not be over analysed as it is easy to get caught up in the computational aspects of analysis. Thus calculation of every possible ratio is likely to result in confusing or even conflicting findings. Additionally, the user is advised not to carry calculations to high levels of precision as the data gathered will probably not be completely accurate in the first place.

The third screen of sub-step 4 of guideline heading 40 poses the question as to how is the best practice recognised. It is stated that the benchmark should represent a level of performance which is clearly superior in the industry and which is being achieved by at least one of the countries in the study. Thus it is possible to determine a gap between internal measurement data against the benchmark. For this to be accurate it is important to ensure that there is consistency between the internal data and data collected from outside sources. In this calculation a negative result is a gap and a positive result is an advantage.

Once a gap has been determined with regard to an outside business the system then requests the user to determine the reasons for the gap. An example of such a reason if there was a cost gap would be that the cost gap is due to higher salaries and a higher ratio of supervisors to workers. Thus merely the indication of the presence of a cost gap is insufficient. Finally this sub-step generates a screen which asks the user to develop a list of benchmark drivers, namely factors which appears to be driving benchmark performance. These factors can include business practises, work practises, standards, environment, economics and culture.

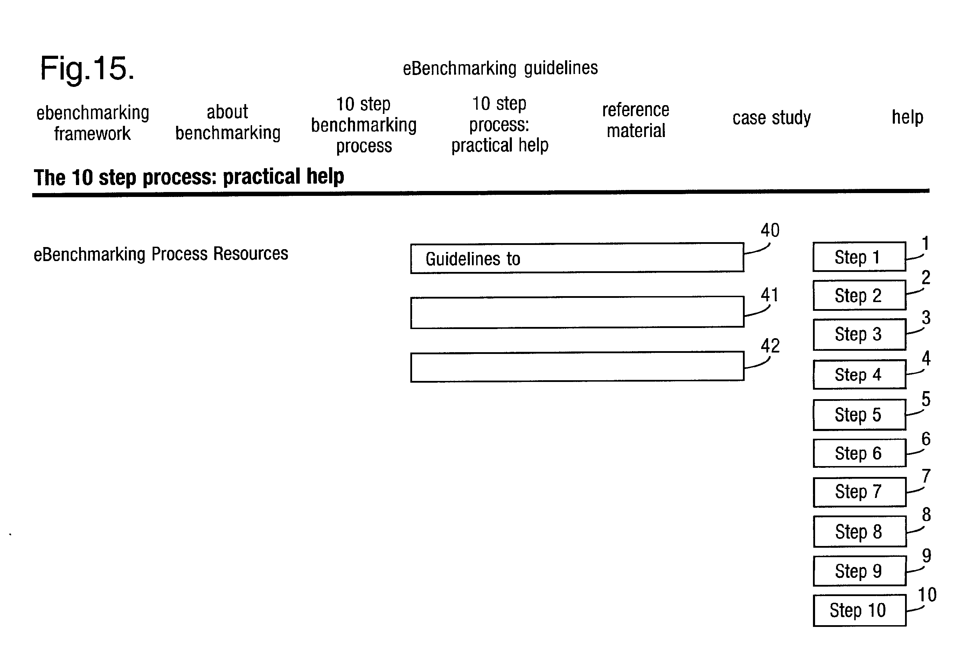

Turning now to sub-step 5 in which initially the user is asked to estimate what will be the benchmark performance level for the next three to five years. The user is asked based on current knowledge of the plans and goals for the current operation under plan to project its performance over the same period as the benchmark. The user is asked to determine if the gap is widening or closing on the basis of the above and to estimate the size of the gap over the next few years. Figures 15A, 15B and 15C are all graphs and show respectively a gap which is narrowing, a gap which is static and a gap which is increasing.

Turning now to sub-step 6 of guideline headings 40 the user has to determine the audience for the result of the benchmarking procedure. Thus this sub-step initially prompts the user to develop a list of all the parties who need to accept the results of the analysis which has been carried out. Examples of such parties as set out in the display screen include management of the user's own company, suppliers, customers and employees.

A further sub-section of this sub-step requests the user to determine the method of communication of the results of the process which has been carried out to date. Thus there are several methods by means of which these results can be communicated. These are set out and include a memo presentation or a formal report. The information is also imparted so that the results of the study should always be documented. If it is not documented there will be a low probability of obtaining the buy-in of any intended audience. The selection of a type of document used should be based on the scope of impact of the study. A short memo may be sufficient for a study with limited audience and where the results have little impact on other organisations. Some studies however may require extensive reports. Additionally different methods may be chosen to communicate based upon the selected audience. For example, it might be necessary to prepare a formal report for suppliers and customers, a memo for communication with management and a presentation to be made to employees.

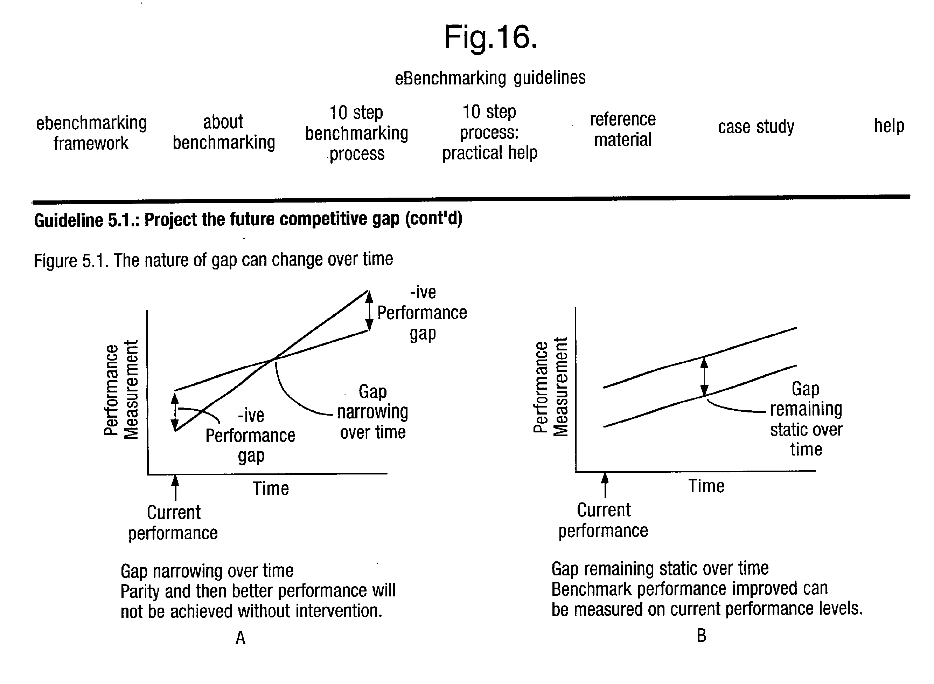

The final sub-section of this guideline sub-step advises the user to organise an analysis so that the probability of acceptance is as high as possible and sets out the following outline which has been proven to be successful. In particular it is important, as set out in the screen shown in Figure 16 of the drawing not to force the audience to review detail data before the results of the analysis have been presented. The key results and conclusions should be presented at the beginning and it should be made certain that the analysis is based on data and not opinion.

Sub-step 7 of guideline heading 40 asks the user to prepare a set of current functional goals, to determine what changes should be made to these goals and perhaps revise the competitive gap projection.

Sub-step 8 of guideline heading 40 asks the user to prepare action plans to support the goals and also how approval for these goals is to be obtained.

Sub-step 9 of guidelines 40 is directed to advising the user concerning the implementation of any action plans which have been decided upon as a result of the analysis already suggested. Thus after approval for action has been obtained the user is asked to ensure that all parties involved understand the role that they must play in implementing the plan. Finally in this sub-step the user is asked to monitor the result of progress when carrying out the plan on a periodic bases. Thus if the plan is not being tracked the user is asked to determine the causes and either take corrective action or modify the plan.

The final step of the sub-steps of guideline heading 40, namely sub-step 10, is a request to the originator of the plan to recalibrate. Thus for a competitive benchmark process to be effective the benchmark needs to be recalibrated. Decisions have to be made how often and how extensively it will have to be recalibrated. It is a common practice to try to recalibrate "critical" benchmarks every year. However, the program prompts the user where it is necessary to make the determination based on characteristics of each particular business environment. During the recalibration process each of the nine steps already discussed are revisited and updated as required.

During the recalibration process each of the nine steps already discussed are revisited and updated as required.

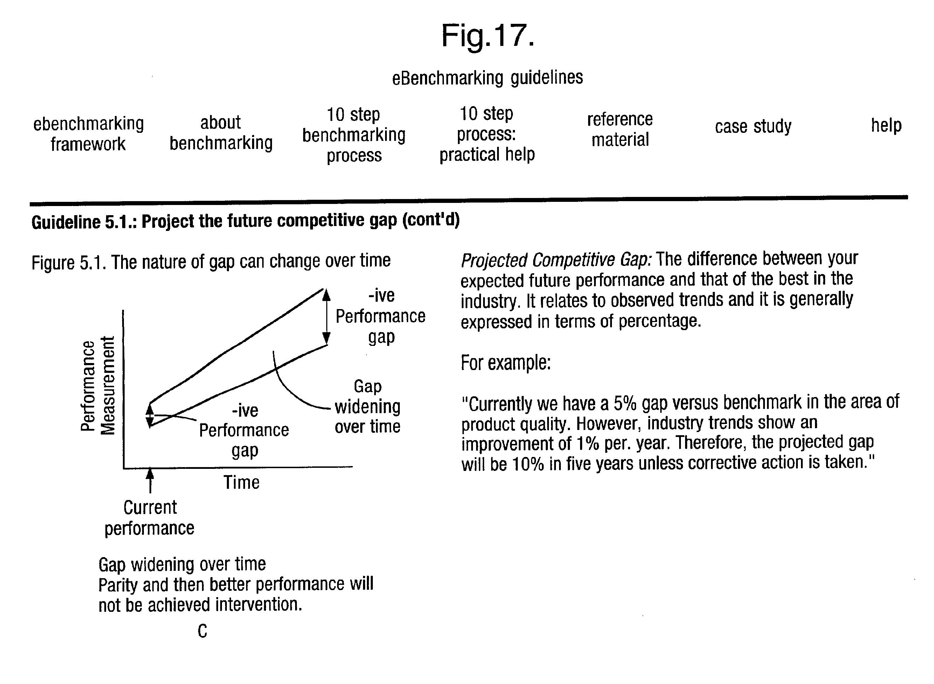

Turning now to the heading 41 of the guidelines shown in Figure 13 the six steps associated with this heading, entitled "Considerations for:" will now be described. Thus sub-step 1 of the considerations 41 starts with the general model displayed shown in Figure 1 and takes the user to a large number of steps which initially centre around the question "for whom is the eCommerce function designed and what environment does it reside in?" Subsequent displays lead the user to consider the market which is involved and the customer, the profit mechanism which is to be employed in the eCommerce situation being benchmarked, and the operational mechanism which is to be employed. Also considered is the purpose of the correct presence. One screen out of 20 screens is shown in Figure 17.

The second sub-step of guideline heading 41 asks the user to consider what types of benchmarking the user wishes to pursue.

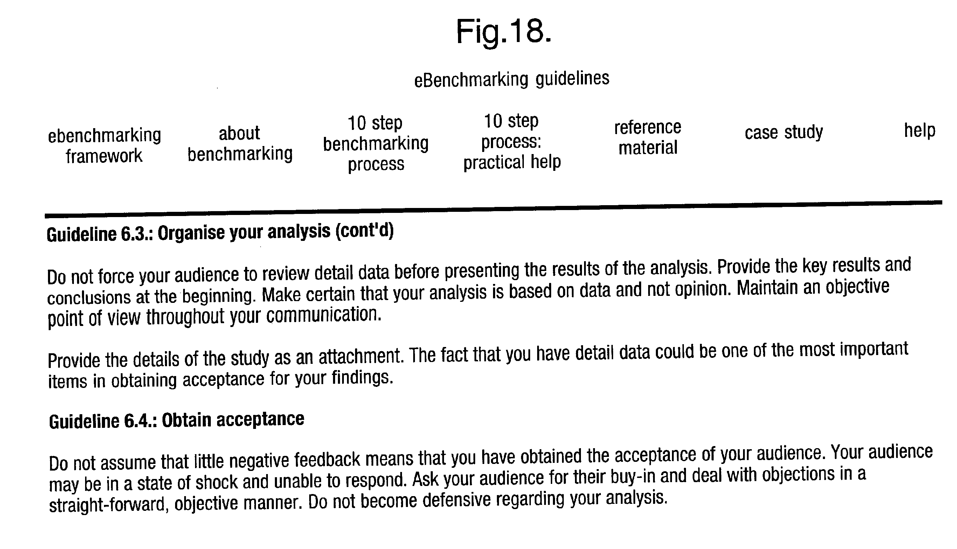

Sub-step 5 of considerations heading 41 asks the user to examine gap analysis to give a good idea as to how rapidly the gap between the project and the benchmark is changing and in what direction. A final sub-step 7 of considerations 41 asks the question in combination with originally discussed step 4 "for whom is the eCommerce function designed and what environment does it reside in?" The examples of the questions asked are shown in the display of Figure 18 thus this sub-step is in many ways similar to that of sub-step 4 and is considered in combination with that sub-step.

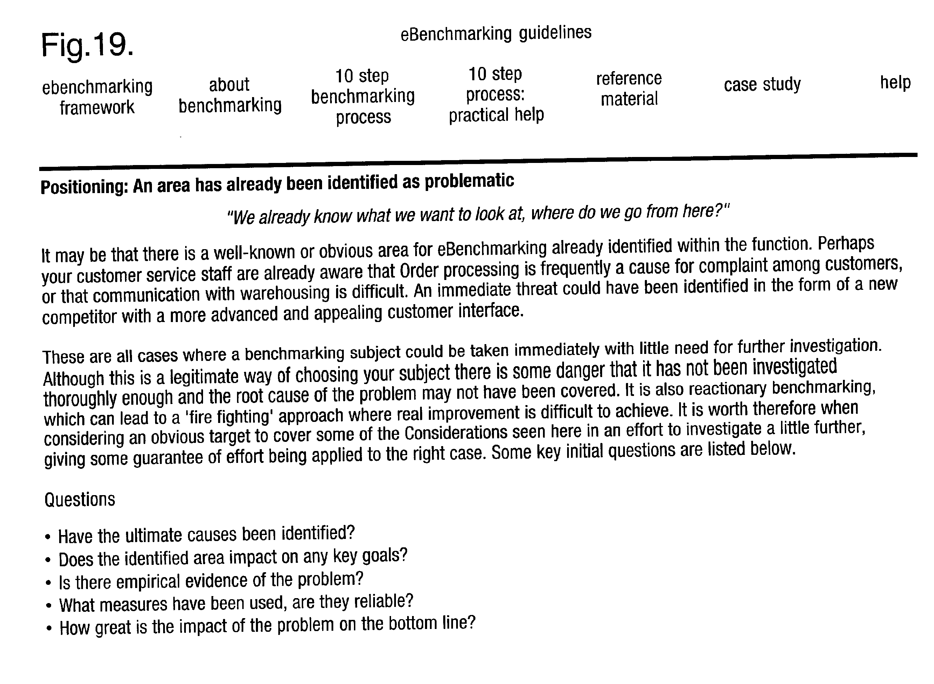

Turning now to the last heading, namely heading 42, this heading considers, as indicated by its title "tools for:" the tools which can be used in ebenchmarking. Sub-step 1 of this heading thus sets out the various tools which can be used such as for example brainstorming, SWOT analysis (strengths, weaknesses, opportunity, threats) and also provides a customer tree diagram which is shown in Figure 19. It also provides an eCommerce business model question check list and suggests that it might be helpful to cascade down from a high level function mission statement when it is unclear how to proceed in selecting areas for benchmarking. The high level statement should give the key deliverables required for the function in question. These can the be examined in turn by asking how they are to be achieved, thus identifying possible deficiencies in the current ability to achieve the mission goals. The possible deficiencies can then be scrutinised for benchmarking subjects. The user is also asked to decide on the level of detail and the decision as to how much detail is to be included is largely a matter of judgement of the operative. The level of detail must be such that the potential change can be quantified but not so much that the impact of that change is lost in the detail and is not seen to affect the bigger business picture, particularly for management purposes. Another tool suggested is the one of process mapping techniques and information is given as to how flow charts may be drawn.

The second sub-step lists a number of resources which can be approached by the user such as consultants who understand the current business, together with other areas which can be investigated to provide information such as trade journals for companies who have received recognition of industry awards, reports from securities and analysts, financial reports, patent awards, business directories etc. This sub-step also suggests using on line database searching and then with a series of questions regarding the subject of the project its objectives and definitions.

Sub-step 4 heading 42 gives information on how best practises are to be recognised. Finally the last sub-step of heading 42 sets out a Gantt chart which is a diagram which documents the schedules of events, activities and responsibilities necessary to compete a project or implement a group solution. Such a chart is shown in Figure 19 of the accompanying drawings.

From the foregoing description it will be appreciated that there is always a link between the two main headings 3H (10 step benchmarking process) and 4H (10 step process:practical help). Thus each of the action steps 24 to 33 will provide a user with appropriate confirmation such as described with regard to action step 24, and will also then provide the user via heading 4H with practical advice. Stepping through either of these headings guides a user through a difficult and complex scenario in a simple and clear manner.

In the embodiment just described a user can browse in a logical manner through approximately 100 pages of detailed information dealing with the problems of benchmarking eCommerce. Additionally the entire program is readily transportable and can be sent over the Internet as an attachment as well as being stored in any suitable recording media, the total program occupying when installed approximately 1090 kilobytes of memory space.

## Claims

1. An electronic processing system for guiding a person through the stages of a project for benchmarking commerce over the internet, the system being adapted to generate sequences of screen displays in response to the inputs from the user, the screen displays containing data relevant to the stages of the benchmarking project.

2. A system according to claim 1, wherein the screen displays are stored in a database having a plurality of levels.

3. A system according to claim 2, wherein one of the levels is a main heading level, the screen display generated by the system at this level consisting of a single page having a plurality of main headings, selection of any one of which leads into the next level of the taxonomy of the database.

4. A system according to claim 3, wherein each page of the screen display accessed by the user in the next level contains at least the main headings of the main level heading by means of which the user can return immediately to the main heading level, together with one or more direction arrows, selection of which enables the user to move either to a next screen display or back to a previous screen display in said next level.

5. A system according to claim 4, wherein one of the main headings, if selected, generates a first screen display identifying a plurality of steps to be carried out in order to accomplish a benchmarking project for commerce over the internet, selection of each step leading into a still further sequence of consecutive screen displays each giving information with regard to the initial selected step.

6. A system according to claim 5 and adapted to generate second screen display providing guidelines for each of said plurality of steps.

7. A system according to claim 6, wherein the second display screen has three selectable headings in addition to the main headings, the sub-sections of each guideline heading relating to individual ones of said plurality of steps of the said first screen display.

8. A system according to claim 7, wherein the second display screen can be reached either by progressing through the plurality of steps of the first display screen or by direct selection using the screen display of the main heading level.

9. A method of guiding a person through the stages of a project for benchmarking commerce over the internet, comprising utilising an electronic processor to generate signals representing sequences of screen displays in response to inputs from a user, the screen displays containing data relevant to the stages of the benchmarking project.

10. A method according to claim 9, wherein the screen displays are stored in a database having a plurality of levels.

11. A method according to claim 10, wherein one of the levels is a main heading level, the screen display generated at this level consisting of a single page having a plurality of main headings selection of any one of which leads into the next level of the taxonomy of the database.

12. A method according to claim 11, wherein each page of the screen display accessed by the user in the next level contains at least the main headings of the main heading level by means of which the user can return immediately to the main level heading, together with one or more direction arrows, selection of which enables the user to move either to a next screen display or back to a previous screen display in said next level.

13. A method according to claim 12, wherein one of the main headings, if selected, generates a first screen display identifying a plurality of steps to be carried out in order to accomplish a benchmarking project for commerce over the internet, selection of each step leading into a still further sequence of consecutive screen displays each giving information with regard to the initial selected step.

14. A method according to claim 13 and adapted to generate second screen display providing guidelines for each of said plurality of steps.

15. A method according to claim 14, wherein the second display screen has three selectable headings in addition to the main headings, the sub-sections of each guideline heading relating to individual ones of said plurality of steps of the said first screen display.

16. A method according to claim 15, wherein the second display screen can be reached either by progressing through the plurality of steps of the first display screen or by direct selection using the screen display of the main heading level.
